# EUROPÄISCHE PATENTSCHRIFT

(11) **EP 0 866 255 B1**
(45) Veröffentlichungstag und Bekanntmachung des Hinweises auf die Patenterteilung: **27.09.2000**
(21) Anmeldenummer: 98101604.1
(22) Anmeldetag: 30.01.1998
(51) Int. Cl.: F16L 3/02, F16L 3/13

(54) **Halterung für ein Leitungsrohr**
Support for a conduit
Support pour une conduite

(30) Priorität: 18.03.1997 DE 29704909 U; 20.01.1998 DE 29800886 U
(43) Veröffentlichungstag der Anmeldung: 23.09.1998
(73) Patentinhaber: REHAU AG + Co, 95111 Rehau (DE)
(72) Erfinder: Utner, Thomas, 95111 Rehau (DE)

(56) Entgegenhaltungen:
- DE-U- 29 505 253
- FR-A- 2 129 673
- GB-A- 2 099 289

## Beschreibung

Die Erfindung betrifft eine Halterung für ein Leitungsrohr, bestehend aus einer schalenförmigen Rohraufnahme und Befestigungselementen, wobei die Rohraufnahme im Querschnitt kreisbogenförmig ausgebildet ist und der Kreisbogen der Stützfläche sich über einen Umschlingungswinkel bis zu 240° erstreckt.

Im Rohrleitungsbau, insbesondere bei der Verlegung von Sanitär- und Heizungsinstallationen werden zunehmend Kunststoffrohre eingesetzt. Hierbei hat es sich gezeigt, daß größere Rohrlängen solcher Leitungsrohre nach kurzer Zeit dazu neigen, durchzuhängen. Dieses Durchhängen entsteht im wesentlichen durch Längenänderungen des nicht starren Rohrleitungsmaterials bei Temperaturwechseln.

Um diesen Nachteil abzustellen, ist versucht worden, die Leitungsrohre an einem Befestigungspunkt starr und an weiteren Befestigungspunkten lose aufzuhängen. Weitere Versuche der Problemlösung wurden darin gesehen, die Leitungsrohre mit relativ dicht aufeinanderfolgenden Rohrschellen abzustützen. Diese Verfahren benötigen zusätzliches Installationsmaterial und eine erhebliche Montagezeit.

Aus dem DE 85 35 534.8 U1 ist eine Rohrhalterung bekanntgeworden, bei der eine Stützschale mit kreisbogenförmiger Stützfläche beschrieben ist, wobei dieser Kreisbogen über einen Umschlingungswinkel von 60° bis 240° verlaufen kann. Diese Stützschale wird über Rohrschellen mit der Wand oder dem Untergrund verbunden. Das Rohr selbst wird in der Stützschale über Kabelbinder gehalten. Die bekannte Stützschale ist aus einem langgestreckten, rundgebogenen Teil aus korrosionsfestem Material, insbesondere aus verzinktem Blech ausgeformt.

Diese Rohrabstützung hat den Nachteil, daß die zur Befestigung dienenden Rohrschellen in einem relativ kurzem Abstand zueinanderstehen müssen, weil die Torsionssteifigkeit der Stützschale größere Abstände - z. B. mehr als 1,5 m - nicht erlaubt. Dadurch steigt auch in diesem Fall der Montageaufwand erheblich an.

Aus dem DE 295 05 253 U1, das den nächst Kommenden Stand der Technikbildet, ist eine weitere Rohrhalterung bekannt, bei der die freien Kanen der Rohraufnahme ohne Reduzierung des Umschlingungswinkels längsverlaufend nach innen umgebördelt sind. Die freien Ränder der Rohraufnahme sind durch diese Umbördelung abgerundet und im Bereich des Umschlingungswinkels ist oberhalb von 180° jeweils eine längsverlaufende Zone doppelter Wanddicke ausgeformt. Durch diese Maßnahme entsteht randseitig eine starke Haltekraft, die das Rohr ohne zusätzliche Hilfsmittel wie Kabelbinder, Klebebänder usw in der Rohraufnahme festhält. Das Problem der Längenänderung der Kunststoffrohre in dieser Rohrhalterung ist zwar gegenüber dem bisherigen Stand der Technik stark verbessert worden, jedoch bei starken Temperaturwechselbeanspruchungen ist diese Verbesserung noch nicht ausreichend.

Hier setzt die Erfindung ein, die es sich zur Aufgabe gestellt hat, die Haltekraft der Rohrhalterung gegenüber dem eingeclipsten Kunststoffrohr weiter zu verbessern. Erfindungsgemäß wird dazu vorgeschlagen, daß der zum Rohr gerichtete Anlagebereich der Umbördelung aufgerauht ist. Diese Aufrauhung kann in Form einer Riefung oder Rändelung eingebracht sein. In einer vorteilhaften Ausführung ist der Anlagebereich mit durchgehenden Querriefen versehen.

Das erfindungsgemäße Aufrauhen im Anlagebereich der Umbördelung in der Rohrhalterung ergibt eine erhebliche Vergrößerung der Haltekraft gegenüber dem eingeclipsten Kunstoffrohr. Diese Vergrößerung der Haltekraft ergibt eine weitere Verringerung der Längenausdehnung der eingeclipsten Kunststoffrohre. Versuche haben hier ergeben, daß die Längenausdehnung der Kunststoffrohre im Vergleich zur Rohrhalterung ohne Aufrauhung im Anlagenbereich der Umbördelung um ca 50 % reduziert werden kann.

Die erfindungsgemäße Riefung oder Rändelung in dem betreffenden Bereich der Umbördelung wirkt dem Bestreben des Kunststoffrohres, bei Temperaturwechseln aus der Cliphalterung herauszugleiten, genauso effektiv entgegen, wie die Längenausdehnung bei Temperaturwechseln durch diese Maßnahme stark reduziert wird.

Weiter hat es sich als vorteilhaft erwiesen, daß an den freien Enden der Umbördelungen Verzahnungen eingebracht sind. Diese Verzahnungen graben sich durch die Vergrößerung der Haltekraft in diesem Bereich in die zugeordnete Rohrwand ein, wodurch eine Bewegung der Rohraufnahme auf dem Rohr, z. B. eine temperaturbedingte Dehnung gänzlich oder nahezu verhindert wird.

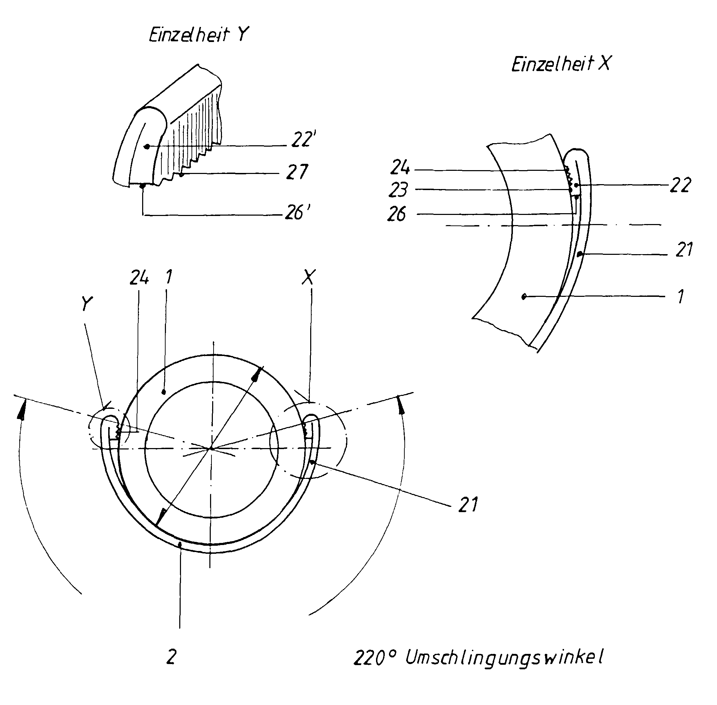

In der Zeichnung ist ein Ausführungsbeispiel der erfindungsgemäßen Rohraufnahme schematisch dargestellt. Gezeigt ist das Rohr 1, welches ein Kunststoffrohr einer vorgegebenen Abmessung sein kann. Dieses Rohr 1 ist in die Rohraufnahme 2 eingeclipst, die in der gezeigten Darstellung einen Umschlingungswinkel von 220° aufweist. Wie die vergrößerte Darstellung X des rechten Randes 21 der Rohraufnahme 2 zeigt, ist der rechte Rand 21 im Bereich 22 ohne Verkleinerung des Umschlingungswinkels von 220° derart nach innen umgebördelt, daß dort ein Bereich einer Doppelwandung entsteht. Diese Doppelwandung ist durchlaufend längs des Randes 21 der Rohrhalbschale 2 angeordnet. Durch diese Doppelwandung entsteht ein kurzer Bereich 23 als Anlagebereich am Rohr 1, durch den ein verstärkter Druck auf das Rohr 1 ausgeübt wird. Dieser verstärkte Druck wird erhöht durch die Aufrauhung 24, die an dem zum Rohr 1 gerichteten Anlagebereich 23 der Umbördelung angeordnet ist. Der dadurch nochmals verstärkte Andruck steht dem Bestreben des Herausdrückens des Rohres 1 aus der Rohraufnahme 2 genauso entgegen, wie sie das Bestreben des Rohres auf Längenausdehnung bei Temperaturwechseln verhindert. Damit sind Festpunkte und Hilfsinstallationen wie Kabelbinder, Klebebänder und dergleichen bei der Verwendung der erfindungsgemäßen Rohrhalterung nicht mehr erforderlich.

Wie die vergrößerte Darstellung Y des linken Randes 25 der Rohraufnahme 2 zeigt, sind in die freien Enden 26, 26' im Bereich 22, 22' Verzahnungen 27 eingebracht. Diese Verzahnungen 27 verlaufen auf der gesamten Länge des freien Endes 26 im Bereich 22 und 22'.

## Patentansprüche

1. Halterung für ein Leitungsrohr, bestehend aus einer schalenförmigen Rohraufnahme und Befestigungselementen, wobei die Rohraufnahme im Querschnitt kreisbogenförmig ausgebildet ist und der Kreisbogen der Stützfläche sich über einen Umschlingungswinkel bis zu 240° erstreckt, wobei die freien Kanten der Rohraufnahme ohne Reduzierung des Umschlingungswinkels längsverlaufend nach innen umgebördelt sowie die freien Ränder der Rohraufnahme durch diese Umbördelung abgerundet sind, und wobei im Umschlingungswinkelbereich oberhalb 180° jeweils eine längsverlaufende Zone doppelter Wanddicke ausgeformt ist, dadurch gekennzeichnet, daß der zum Rohr (1) gerichtete Anlagebereich (23) der Umbördelung mit einer Aufrauhung (24) versehen ist.

2. Halterung nach Anspruch 1, dadurch gekennzeichnet, daß die Aufrauhung (24) des Anlagebereichs (23) aus einer Riefung oder Rändelung besteht.

3. Halterung nach Anspruch 2, dadurch gekennzeichnet, daß die Riefung eine Querriefung ist.

4. Halterung nach einem oder mehreren der vorangegangenen Ansprüche, dadurch gekennzeichnet, daß als Aufrauhung (24) abwechselnd Riefungen und Rändelungen in den Anlagebereich (23) der Umbördelung eingebracht sind.

5. Halterung nach Ansprüchen 1 und 4, dadurch gekennzeichnet, daß in die freien Enden (26, 26') im Bereich (22, 22') Verzahnungen (27) eingebracht sind.

## Claims

1. Mounting for a conduit pipe, consisting of a deep-saucer-like pipe holder and fixing elements, whereby the pipe holder has a circular-arc-shaped cross-section and the circular arc of the supporting surface extends over an arc of contact of up to 240°, whereby the free edges of the pipe holder are flanged inwards in a longitudinal direction without reducing the angle of arc, and the free edges of the pipe holder are rounded by this flanging, and whereby a zone running in a longitudinal direction above 180° has a double wall thickness, characterised by the fact that the area of contact (23) of the flanging facing the pipe (1) is roughened (24).

2. Holder in accordance with claim 1, characterised by the fact that the roughening (24) of the area of contact (23) is made of a fluting or beading.

3. Holder in accordance with claim 2, characterised by the fact that the fluting is cross-fluting.

4. Holder in accordance with one or several of the above claims, characterised by the fact that fluting and beading is provided as roughened surface (24) alternately in the area of contact (23) of the flanging.

5. Holder in accordance with claims 1 to 4, characterised by the fact that denticulation (27) is provided in the free ends (26, 26') in the area (22, 22').

## Revendications

1. Fixation pour tube, constituée d'une enveloppe en forme de cuvette et d'éléments de fixation. L'enveloppe est en arc de cercle et l'arc de cercle de la surface d'appui s'étend sur un angle de contact jusqu'à 240°, les arêtes libres de l'enveloppe sont rabattues vers l'intérieur longitudinalement sans réduction de l'angle de contact et les bords libres de l'enveloppe sont arrondis par ce bord rabattu; une zone longitudinale à double épaisseur de paroi est formée au niveau de l'angle de contact, au delà de 180°, caractérisée en ce que la zone d'appui (23) du bord rabattu, orientée vers le tube (1) est munie d'une zone d'accroche (24).

2. Fixation selon la revendication 1, caractérisée en ce que la zone d'accroche (24) de la zone d'appui (23) du bord rabattu est constituée d'un striage ou moletage.

3. Fixation selon la revendication 2, caractérisée en ce que le striage est un striage transversale.

4. Fixation selon l'une ou l'autre des revendications précédentes, caractérisée en ce que la zone d'accroche (24) est constituée en alternance de striages et de moletages au niveau de la zone d'appui (23).

5. Fixation selon les revendications 1 et 4, caractérisée en ce que les extrémités libres (16, 26) sont munies d'une denture (27) dans les zones (22, 22').
